**Europäisches Patentamt**

**European Patent Office**

**Office européen des brevets**

(11) Veröffentlichungsnummer: **0 214 581 B1**

(12) **EUROPÄISCHE PATENTSCHRIFT**

(45) Veröffentlichungstag der Patentschrift: **30.11.94**

(21) Anmeldenummer: **86112032.7**

(22) Anmeldetag: **30.08.86**

(51) Int. Cl.⁵: **C08K 3/00**, C08K 5/00, C08L 67/02, //(C08L67/02,67:02)

(54) **Schnellkristallisierende Polyestermassen und Verfahren zu deren Herstellung.**

(30) Priorität: **09.09.85 DE 3532033**

(43) Veröffentlichungstag der Anmeldung:
**18.03.87 Patentblatt 87/12**

(45) Bekanntmachung des Hinweises auf die
Patenterteilung:
**30.11.94 Patentblatt 94/48**

(84) Benannte Vertragsstaaten:
**BE CH DE FR GB LI LU NL**

(56) Entgegenhaltungen:
**EP-A- 0 078 937**
**LU-A- 52 394**

(73) Patentinhaber: **HOECHST AKTIENGESELL-SCHAFT**

**D-65926 Frankfurt (DE)**

(72) Erfinder: **Espenschied, Bernd, Dr.**
**Rieslingstrasse 15**
**D-6500 Mainz-Hechtsheim (DE)**
Erfinder: **Klein, Peter, Dr.**
**Fasanenweg 13**
**D-6200 Wiesbaden (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 214 581 B1

## Beschreibung

Polyethylenterephthalat (PET) wird zur Herstellung von Formkörpern, Folien und Fasern verwendet. Ein in diesem Zusammenhang bekanntes Problem liegt darin, daß PET nur eine geringe Kristallisationsneigung zeigt. Es ist bekannt, daß die Kristallisationsgeschwindigkeit von PET durch nachträgliches Einarbeiten von Nukleierungsmitteln gesteigert werden kann. Dabei zeigt sich, daß die guten Nukleierungsmittel den Polyester bei der Einarbeitung deutlich abbauen, während Zusätze ohne diese unerwünschte Begleiterscheinung das Kristallisationsverhalten in der Regel nur wenig verbessern. Zu den wenig wirksamen Nukleierungsmitteln gehören inerte anorganische Mineralien, inerte Metalloxide oder andere inerte Metallsalze, wie z.B. Kalk, Porzellanerde, Talkum, Glimmer, Kaolin, Silikate, Alumosilikate, Titandioxid, Zirkondioxid, Aluminiumoxid, Eisenoxide, Chromoxide, Zinksulfid, Bariumtitanat, Bariumsulfat, Calciumsulfat, Zinktitanat, Strontiumsulfat, Calciumcarbonat.

Zu den besonders guten Nukleierungsmitteln gehören demgegenüber die Alkalisalze organischer Säuren, wie die aliphatischer, aromatischer oder auch heterocyclischer Carbonsäuren. Auch Alkalisalzen mit andersgearteten Säureresten, wie z.B. Alkali-Paraffinsulfonaten, Alkali-Olefinsulfonaten und Alkali-Arylsulfonaten, Alkali-Sulfinaten, Alkali-Phosphonaten, Alkali-Phosphinaten oder auch Alkali-Phenolaten wird eine gute Nukleierungswirkung zugeschrieben.

Ferner ist bekannt, daß durch nachträgliches Einarbeiten einer Kombination aus Nukleierungsmittel und organischem Kristallisationsbeschleuniger, der die Kettenbeweglichkeit des PET in der Schmelze erhöht, die Kristallisationsgeschwindigkeit des PET nochmals erhöht wird bzw. der Temperaturbereich, in dem beim Abkühlen aus der Schmelze eine Kristallisation ablaufen kann, erweitert wird.

So werden in der DE-Offenlegungsschrift 1.569.600 kristallisationsbeschleunigte PET-Massen beschrieben, die dadurch hergestellt werden, daß in PET nachträglich eine Kombination eines nichtaufgelösten Testen Stoffes (Nukleierungsmittel) und einer die Kristallisation erleichternden organischen Flüssigkeit (Kristallisationsbeschleuniger) zugegeben werden. Als Nukleierungsmittel kommen dabei in Frage: Magnesiumoxid, feinverteilte Metalle, Kupfer- oder Antimonpulver, Salze von Erdalkalimetallen, Calciumkarbonat, Graphit, Glaspulver, calcinierter Gips oder Talkum. Als Kristallisationsbeschleuniger werden u.a. aliphatische, aromatische oder gemischt aliphatisch-aromatische Ketone, aliphatische, aromatische oder gemischt aliphatisch-aromatische Amine oder halogenierte aliphatische Kohlenwasserstoffe beschrieben.

Die DE-Patentschrift 2.907.729 betrifft schnellkristallisierende Polyestermassen, die durch nachträgliches Einarbeiten des Natrium- oder Kaliumsalzes einer Kohlenwasserstoffsäure mit 7 bis 25 Kohlenstoffatomen (Stearate, Pelargonate, Behenate) zusammen mit einer weiteren organischen Verbindung hergestellt werden. Dazu gehören bestimmte organische Ester, organische Ketone, organische Sulfone, organische Sulfoxide, organische Nitrile oder organische Amide.

Analog werden nach der US-PS 4.327.007 schnellkristallisierende PET-Massen unter Verwendung des Natriumsalzes einer Kohlenwasserstoffsäure mit 9 bis 25 Kohlenstoffatomen als Nukleierungsmittel und eines Esters einer aliphatischen Carbonsäure mit 2 - 8 Kohlenstoffatomen und mindestens einer Carboxylgruppe und eines Alkohols mit 1 bis 10 Kohlenstoffatomen und einer Hydroxylgruppe hergestellt.

Schnellkristallisierende PET-Massen können nach der EP-Offenlegungsschrift 46 052 auch durch nachträgliches Einmischen von Alkalimetallsalsen, die als Anion Oxide eines Elementes aus der 4. Hauptgruppe des Periodensystems (wie z.B. Alkalimetallcarbonate oder Alkalimetallhydrogencarbonate) enthalten, zusammen mit "Weichmachern" in herkömmliches, separat hergestelltes PET erhalten werden. Als "Weichmacher" kommen dabei organische Verbindungen in Frage, wie sie auch in der DE-Patentschrift 29 07 729 und EP-Offenlegungsschrift 46 052 beschrieben sind, beispielsweise Ester, Polyglykole oder Benzophenon.

All diesen Verfahren zur Herstellung schnellkristallisierender Polyethylenterephthalatmassen ist gemeinsam, daß das Nukleierungsmittel und der organische Kristallisationsbeschleuniger nachträglich in separat bereits hergestelltes PET eingearbeitet oder daß Kristallisationsbeschleuniger mit freien Hydroxyl- oder Carboxylgruppen eingesetzt werden. Es ist aber bekannt, daß beispielsweise die als sehr guten Nukleierungsmittel verwendeten Natrium- (Alkali-)Salze organischer Carbonsäuren beim nachträglichen Einarbeiten in den Polyester mit dem Polyester unter Kettenabbau reagieren. Da aber andererseits so wichtige mechanische Eigenschaften, wie zum Beispiel Zugfestigkeit, Reißfestigkeit oder auch Zähigkeit, sich mit fallendem Molekulargewicht der Polymermatrix verschlechtern, geht mit der nachträglichen Einarbeitung der angesprochenen Nukleierungsmittel der Verlust eines Teils der potentiellen, dem nichtnukleierten PET eigenen mechanischen Eigenschaften einher. Das heißt mit anderen Worten: Um ein vorgegebenes Eigenschaftsniveau und damit verbunden ein bestimmtes Molekulargewicht des Polyesters in der schnellkristallisierenden Polyestermasse einstellen zu können, muß also zunächst ein Polyester mit höherem Molekulargewicht hergestellt werden, der dann anschließend bei der Nukleierung oder bei der Zugabe des Kristallisationsbeschleunigers wieder abgebaut wird.

Es ist auch versucht worden, die Kristallisationseigenschaften von Polyethylenterephthalat zu verändern, indem einem in-situ Natriumnukleierten Polyester ein oligomerer Polyester mit einem Molekulargewicht zwischen 2000 und 5000 g/mol, der freie Hydroxyl- und Carboxylgruppen enthält, zugemischt wird (DD-A 226 896). Der zugesetzte oligomere Polyester führt aber zu einem nicht unbeträchtlichen Abbau des nukleierten Polyesters bei der Herstellung der Compounds und damit zu einem deutlichen Verlust an Festigkeit im späteren Formteil.

Der vorliegenden Erfindung liegt daher die Aufgabe zugrunde, ein wirtschaftlicheres Verfahren zur Herstellung schnellkristallisierender Polyestermassen bereitzustellen, bei dem der angesprochene Molekulargewichtsabbau durch die Nukleierung oder durch den Kristallisationsbeschleuniger vermieden oder zumindest deutlich vermindert wird.

Die Lösung dieser Aufgabe erfolgt erfindungsgemäß in überraschend einfacher Weise dadurch, daß in einer ersten Stufe zunächst die Herstellung eines nukleierten oder hoch nukleierten Polyesters in Gegenwart von bestimmten Mengen an Alkalimetall oder einer AlkalimetallVerbindungen erfolgt und dann in einer zweiten Stufe ein organischer Kristallisationsbeschleuniger in bestimmten Mengen sowie ggf. weiterer nichtnukleierter Polyester zugegeben werden.

Die Erfindung betrifft daher ein Verfahren zur Herstellung von schnellkristallisierenden Polyestern wie es in den Ansprüchen angegeben ist.

Weiterhin bezieht sich die Erfindung auf eine Formmasse auf Basis von Polyester mit einer reduzierten spezifischen Viskosität (gemessen in 1 %iger Lösung in Dichloressigsäure bei 25°C) von mindestens 0,3 dl/g, dessen Carboxyl-Endgruppen zumindest teilweise in Alkalimetallcarboxylat-Endgruppen umgewandelt sind, gekennzeichnet durch einen Gehalt an

a) einem Kristallisationsbeschleuniger in einer Menge, die ausreicht, um die Nachkristallisationstemperatur gegenüber derjenigen des Polyesters ohne diesen Kristallisationsbeschleuniger um mindestens 4°C zu erniedrigen, und

b) einer Alkalimetall-Verbindung,

und wobei 1 % bis 100 %, vorzugsweise 2 % bis 50 %, des Polyesters in Anwesenheit von Alkalimetall oder einer Alkalimetall-Verbindung hergestellt worden ist.

Der nach dem erfindungsgemäßen Verfahren erhältliche Polyester wird überrraschenderweise wesentlich weniger stark abgebaut als ein nichtnukleierter Polyester gleichen Molekulargewichts, in den nachträglich gemäß Stand der Technik äquivalente Mengen des Nukleierungsmittels zusammen mit dem organischen Kristallisationshilfsmittel eingearbeitet werden. Bei Anwendung des Umesterungs-/Polykondensationsverfahrene liegt ein weiterer Vorteil darin, daß die katalytische Aktivität des eingesetzten Alkalimetalls bzw. der Alkalimetall-Verbindung genutzt werden kann. So lassen sich bei Zugabe des Alkalimetalls bzw. der Alkalimetall-Verbindung zu einem geeigneten Zeitpunkt im Verlauf der Umesterung ohne Beeinträchtung der Polykondensationszeiten die Umesterungszeiten und damit die Gesamtherstellzeiten merklich verkürzen gegenüber einer gleichen Reseptur ohne Alkalimetall bzw. Alkalimetall-Verbindung.

Erfindungsgemäß erfolgt in der ersten Stufe, je nach Menge des eingesetzten Alkalimetalls oder der Alkalimetall-Verbindung die Herstellung eines nukleierten oder vorzugsweise hochnukleierten Polyesters.

Als nukleierte und hochnukleierte gemäß dieser ersten Stufe oder als nichtnukleierte Polyester gemäß der zweiten Stufe kommen grundsätzlich alle bekannten kristallisierfähigen, linearen oder schwach verzweigten Polyester in Frage, wie sie beispielsweise in (R.E. Wilfong, J. Polymer Sci. 54, S. 385 - 410 (1961) oder in Ullmanns Enzyklopädie der technischen Chemie (4. Aufl.) 19, S. 61 - 68 (1980), beschrieben sind. Bevorzugt ist Polybutylenterephthalat und besonders bevorzugt Polyethylenterephthalat. Ein anderer Polyester, der erfindungsgemäß auch eingesetzt werden kann, ist zum Beispiel Polycyclohexan-1,4-dimethylolterephthalat.

Geeignet sind ferner Polyester, die als Säurekomponenten neben Terephthalsäure bis zu 20 Molprozent, vorzugsweise bis zu 10 Molprozent andere aromatische, araliphatische oder aliphatische Dicarbonsäuren und/oder bis zu 2 Molprozent, vorzugweise bis zu 1 Molprozent tri- oder mehrfunktionelle Carbonsäuren enthalten und die als Diolkomponente neben Butylenglykol oder vorzugsweise Ethylenglykol bis zu 20 Molprozent, vorzugsweise bis zu 10 Molprozent aromatische, araliphatische, oder andere aliphatische Diole und/oder bis zu 2 Molprozent, vorzugsweise bis zu 1 Molprozent tri- oder mehrfunktionelle Alkohole enthalten.

Zu den hier angesprochenen Dicarbonsäuren und den tri- oder mehrfunktionellen Carbonsäuren gehören zum Beispiel Isophthalsäure, Phthalsäure, alkylsubstituierte Phthalsäuren, alkylsubstituierten Isophthalsäuren oder alkylsubstituierten Terephthalsäuren, Naphthalindicarbonsäuren, wie z.B. 2,6-Naphthalindicarbonsäure, 2,7-Naphthalindicarbonsäure, aliphatische Dicarbonsäuren, wie z.B. Bernsteinsäure, Adipinsäure, Sebacinsäure, oder Dekandicarbonsäure, Dimersäure, Trimersäure, alicyclische Dicarbonsäuren wie z.B Cyclohexandicarbonsäure, Trimesinsäure, Trimellithsäure oder Pyromellithsäure.

Die di- und mehrfunktionellen Carbonsäuren können dabei zur Synthese der nukleierten, hochnukleierten bzw. nichtnuklelerten Polyester in bekannter Weise entweder in ihrer freien Form oder als esterbildende Derivate, wie z.B. als Di- oder Polymethylester, verwendet werden. Zur Synthese des nukleierten und des hochnukleierten Polyesters werden sie bevorzugt als esterbildende Derivate, bevorzugt als Di- oder Polymethylester eingesetzt.

Dadurch kann zusätzlich die katalytische Aktivität der erfindungsgemäß eingesetzten Alkalimetalle oder der Alkalimetallverbindung im Verlauf der Umesterungsstufe genutzt werden.

Zu den oben angesprochenen Diolkomponenten oder den tri- bzw. mehrfunktionellen Alkoholen gehören zum Beispiel Trimethylenglykol, 1,2-Propandiol, Hexamethylenglykol, Neopentylglykol, Di- oder Triethylenglykol, 1,4-Cyclohexandimethanol, Di- oder Polyhydroxybenzole, wie z.B. Hydrochinon oder Resorcin, Bisphenole, wie z.B. Bisphenol A, Bisphenol F, und aromatische Diole, wie z.B. Etherdiole aus Bisphenolen und Glykolen, Trimethylolpropan oder Pentaerythrit. Als Diolkomponenten können ferner lineare Oligo- bzw. Polyester oder Oligo- bzw. Polyether mit je zwei endständigen Hydroxylgruppen und Molekulargewichten bis zu 10.000 g/mol oder vorzugsweise bis zu 5000 g/mol, besonders bevorzugt bis 2000 g/mol gewählt werden. Hierzu gehören zum Beispiel Polytetrahydrofurane mit Molekulargewichten von 650 bis 2000 g/mol.

Alle di- und mehrfunktionellen Alkoholkomponenten können dabei zur Synthese der nukleierten, hochnukleierten oder nichtnukleierten Polyester entweder als esterbildende Derivate oder vorzugsweise in ihrer freien Form eingesetzt werden.

Statt oder zusätzlich zu den angesprochenen Cokomponenten können die erfindungsgemäß hergestellten nukleierten bzw. hochnukleierten Polyester oder die eingesetzten nichtnukleierten Polyester auch bis zu 20 Molprozent, vorzugsweise bis zu 10 Molprozent Hydroxycarbonsäuren, wie z.B. $\epsilon$-Hydroxycapronsäure, Hydroxybenzoesäure oder Hydroxyethoxybenzoesäure, enthalten, die zur Polyestersynthese entweder in ihrer freien Form oder als esterbildende Derivate eingesetzt werden.

Die erfindungsgemäß hergestellten nukleierten bzw. hochnukleierten Polyester sowie die in der zweiten Stufe eingesetzten nichtnukleierten Polyester haben reduzierte spezifische Viskositäten, gemessen als 1 %ige Lösungen in Dichloressigsäure bei 25°C, von mindestens 0,3 dl/g, vorzugsweise von mindestens 0,5 dl/g und besonders bevorzugt von mindestens 0,6 dl/g. Für den Fall, daß Butylenglykol als Hauptkomponente vorliegt, betragen die reduzierten Viskositäten mindestens 0,6 dl/g, vorzugsweise mindestens 0,8 dl/g und besonders bevorzugt mindestens 0,9 dl/g.

Neben den angesprochenen Homopolyestern und den Copolyestern auf Basis von Polybutylenterephthalat oder Polyethylenterephthalat selbst können als nichtnukleierte Polyester auch Mischungen der angesprochenen Homo- und Copolyester, wie z.B. Mischungen aus Polybutylenterephthalat und Polyethylenterephthalat, oder auch Mischungen eines oder mehrerer der angesprochenen Homo- oder Copolyester mit mindestens einem weiteren Polyester, wie z.B. Mischungen aus Polyethylenterephthalat und einem Polyester auf Basis Bisphenol A/Isophthalsaure/Terephthalsäure, zum Einsatz kommen. Ebenso können als nichtnukleierte Polyester auch Mischungen aus einem oder mehreren dieser Homo- oder Copolyester mit mindestens einem weiteren thermoplastisch verarbeitbaren Polymeren, wie z.B. Polyethylen, Polypropylen, Polycarbonat, Polyacetal, Polyamid, ABS-Polymere etc. verwendet werden. Der Gewichtsanteil dieser Homo- und Copolyester in den Mischungen beträgt dabei im allgemeinen mindestens 50 %, vorzugsweise mindestens 65 %, besonders bevorzugt mindestens 70 %.

Die Herstellung der nukleierten bzw. hochnukleierten Polyester gemäß der ersten Stufe erfolgt in Anwesenheit von Alkalimetall oder Alkalimetall-Verbindung. Als Alkalimetalle kommen vorzugweise Lithium, Natrium und Kalium in Frage. Natrium ist dabei besonders bevorzugt. Auch Legierungen dieser Metalle untereinander sowie mit anderen Metallen, wie in der DE-Offenlegungsschrift 18 04 914 beschrieben, können erfindungsgemäß eingesetzt werden.

Als Verbindungen der Alkalimetalle sind generell alle Verbindungen dieser Metalle mit H-aciden anorganischen oder organischen Verbindungen geeignet, sofern sie die Umesterung oder Polykondensation nicht nachteilig beeinflussen.

Als anorganische Verbindungen der Alkalimetalle, vorzugsweise des Natriums, kommen beispielsweise die entsprechenden Silikate, Phosphate, Phosphite, Sulfate oder bevorzugt Carbonate, Hydrogencarbonate und Hydroxide in Frage.

Zu den organischen Verbindungen der Alkalimetalle, vorzugsweise des Natriums, gehören die entsprechenden Salze von aliphatischen, araliphatischen oder aromatischen Carbonsäuren mit vorzugsweise bis zu 30 C-Atomen und vorzugsweise 1 bis 4 Carboxylgruppen. Beispiele hierfür sind die Alkalimetall-Salze der Ameisensäure, Essigsäure, Propionsäure, Buttersäure, Isobuttersäure, Caprylsäure, Stearinsäure, Cyclohexancarbonsäure, Bernsteinsäure, Adipinsäure, Korksäure, 1,10-Decandicarbonsäure, 1,4-Cyclohexandicarbonsäure, Terephthalsäure, 1,2,3-Propantricarbonsäure, 1,3,5-Cyclohexantricarbonsäure, Trimellithsäure, 1,2,3,4-Cyclopentantetracarbonsäure, Pyromellithsäure, Benzoesäure, substituierten Bezoesäuren, Dimersäure und Trimersäure sowie neutrale oder teilneutralisierte Montanwachssalze oder Montanwachsestersalze (Montanate).

Auch Salze mit andersgearteten Säureresten, wie z.B. Alkali-Paraffinsulfonate, Alkali-Olefinsulfonate und Alkali-Arylsulfonate oder auch Phenolate sowie Alkoholate, wie z.B. Methanolate, Ethanolate, Glykolate, können erfindungsgemäß eingesetzt werden. Bevorzugt werden Natriumcarbonat, Natriumhydrogencarbonat, Natriumhydroxid, Natriumsalze von Mono- und Polycarbonsäuren, insbesondere die aliphatischer Mono- und Polycarbonsäuren mit vorzugsweise 2 bis 18 C-Atomen, insbesondere 2 bis 6 C-Atomen und bis zu vier, vorzugsweise bis zu zwei Carboxylgruppen, sowie Natriumalkoholate mit vorzugsweise 2 bis 15 C-Atomen, insbesondere 2 bis 8 C-Atomen, verwendet. Beispiele besonders bevorzugter Vertreter sind: Natriumacetat, Natriumpropionat, Natriumbutyrat, Natriumoxalat, Natriummalonat, Natriumsuccinat, Natriummethanolat, Natriumäthanolat, Natriumglykolat. Es können auch Gemische verschiedener Alkalimetallverbindungen eingesetzt werden.

Das Alkalimetall oder die Alkalimetallverbindungen werden zu einem beliebigen Zeitpunkt der Synthese des nukleierten bzw. des hochnukleierten Polyesters nach dem Veresterungs-/Polykondensationsverfahren oder vorzugsweise nach dem Umesterungs-/Polykondensationsverfahren zugegeben. Besonders bevorzugt ist die Zugabe zu Beginn der Umesterung bei Anwendung des Umesterungs-/Polykondensationsverfahrens, da dann zusätzlich die reaktionsbeschleunigende Wirkung des Alkalimetalls oder der Alkalimetallverbindung auf den Verlauf der Umesterung, gegebenenfalls unter Verzicht auf weitere Umesterungskatalysatoren, genutzt werden kann. Das Veresterungs-/Polykondensationsverfahren bzw. das Umesterungs-/Polykondensationsverfahren, nach denen die Herstellung des erfindungsgemäßen schnellkristallisierenden Polyesters erfolgt, sind wohlbekannt und beispielsweise beschrieben in Ullmann's Encyclopädie der technischen Chemie (4. Auflage) 19, S. 61 - 68 (1980).

Die Menge an Alkalimetall oder Alkalimetallverbindung im schnellkristallisierenden Polyester liegt dabei im allgemeinen zwischen $2 \times 10^{-3}$ mol und 0,1 mol, vorzugsweise zwischen $5 \times 10^{-3}$ mol und $6 \times 10^{-2}$ mol pro kg des schnellkristallisierenden Polyesters.

Nach einer bevorzugten Verfahrensvariante wird zunächst ein hochnukleierter Polyester in Gegenwart von Alkalimetall oder Alkalimetallverbindung in einer Menge von etwa $2 \times 10^{-2}$ bis 1 mol, vorzugsweise $5 \times 10^{-2}$ mol bis $6 \times 10^{-1}$ mol, jeweils pro kg dieses hochnukleierten Polyesters, hergestellt. Dabei sind diese Mengen an und für sich nicht kritisch. Bei Überschreiten der Obergrenze tritt jedoch im allgemeinen zunehmend eine Verlangsamung der Kondensationsreaktion ein, während unterhalb der Untergrenze die Vorteile dieser Verfahrensvariante immer weniger zum Tragen kommen. Dem so erhaltenen hochnukleierten Polyester wird dann in einer zweiten Stufe nichtnukleierter Polyester sowie der Kristallisationsbeschleuniger zugemischt. Die Menge an nichtnukleiertem Polyester wird dabei so gewählt, daß die Alkalikonzentration in der erhaltenen Mischung im allgemeinen zwischen $1 \times 10^{-3}$ bis 0,1 mol, vorzugsweise $5 \times 10^{-3}$ bis $6 \times 10^{-2}$, mol, jeweils pro kg des schnellkristallisierenden Polyesters, liegt. Dies wird im allgemeinen durch ein Mischungsverhältnis von 1 : 1 bis 1 : 100, vorzugsweise von 1 : 5 bis 1 : 50 erreicht. Das Zumischen kann dabei in allen gängigen Mischapparaten, wie z.B. in Compoundierknetern oder Compoundierextrudern, erfolgen.

Die Alkaliverbindung kann in dem schnellkristallisierenden Polyester in der ursprünglichen Form oder in abgewandelter Form vorliegen, entstanden durch chemischen Umsatz im Verlaufe der Polyesterherstellung mit den Monomeren, den Oligomeren oder dem fertigen Polyester.

Als Kristallisationsbeschleuniger werden erfindungsgemäß die im Anspruch 1 definierten Verbindungen verwendet. Das Molekulargewicht (Zahlenmittel) liegt vorzugsweise unterhalb von 1900, insbesondere unterhalb von 1500. Die Kristallisationsbeschleunigung im schnellkristallisierenden Polyester sollte so groß sein, daß - bei einer Konzentration des Kristallisationsbeschleunigers von 10 Gew.-%, bezogen auf den schnellkristallisierenden Polyester, eine Erniedrigung der Nachkristallisationstemperatur ($T_N$; siehe hierzu weiter unten) von mindestens 4°C gegenüber dem gleichen schnellkristallisierenden Polyester, jedoch ohne den Kristallisationsbeschleuniger erreicht wird.

Beispiele für erfindungsgemäß einzusetzende Kristallisationsbeschleuniger sind:

a) organische Ester aus einer aromatischen oder araliphatischen Carbonsäure mit 7 bis 13 Kohlenstoffatomen, enthaltend mindestens eine Carboxylgruppe pro aromatischem Kern und einem Alkohol der Formel $(HOCH_2)_x R'$ (I) worin x die Zahl 1, 2, 3, oder 4 repräsentiert und R' ein Kohlenwasserstoffrest mit 2 bis 15, vorzugsweise 2 bis 12 Kohlenstoffatomen ist oder einem Alkohol der Formel $HO(R''O)_y R'''$ (II), worin y eine ganze Zahl zwischen 1 und 15, vorzugsweise zwischen 2 und 8 ist, R'' ein Kohlenwasserstoffrest mit 2 bis 15 Kohlenstoffatomen, vorzugsweise 2 bis 8 Kohlenstoffatomen, ist und R''' ein Wasserstoffatom oder einen Kohlenwasserstoffrest mit 2 bis 20 Kohlenstoffatomen, vorzugsweise 2 bis 12 Kohlenstoffatomen, darstellt; bei einbasischen, aromatischen oder araliphatischen Carbonsäuren ist x in Formel (I) vorzugsweise 2 oder 3, insbesondere 2; R''' in der Formel (II) ist in diesem Falle vorzugsweise ein H-Atom. Im Falle von zwei- oder mehrbasischen aromatischen oder araliphatischen Carbonsäuren ist x in der Formel (I) vorzugsweise 1 und R''' in der Formel (II) bevorzugt der bezeichnete Kohlenwasserstoffrest. Diese organischen Ester gemäß a) sollen keine freien Hydroxyl- oder Carboxylgruppen enthalten;

b) organische Ester aus einer aliphatischen Carbonsäure mit 2 bis 12 Kohlenstoffatomen, enthaltend mindestens eine Carboxylgruppe, vorzugsweise zwei Carboxylgruppen und einem Alkohol der Formel $(HOCH_2)_xR'$ (I), worin x die Zahl 1, 2, 3 oder 4 repräsentiert und R' ein Kohlenwasserstoffrest mit 2 bis 15, vorzugsweise 2 bis 12 Kohlenstoffatomen ist oder einem Alkohol der Formel $HO(R''O)_yR'''$ (II), worin y eine ganze Zahl zwischen 1 und 15, vorzugsweise zwischen 1 und 8 ist, R'' ein Kohlenwasserstoffrest mit 2 bis 15 Kohlenstoffatomen, vorzugsweise 2 bis 8 Kohlenstoffatomen, ist und R''' ein Wasserstoffatom oder einen Kohlenwasserstoffrest mit 2 bis 20 Kohlenstoffatomen darstellt; bei einbasischen aliphatischen Carbonsäuren ist x in Formel (I) vorzugsweise 2 oder 3, insbesondere 2; R''' in der Formel (II) ist in diesem Falle vorzugsweise ein H-Atom. Im Falle von zwei- oder mehrbasischen aliphatischen Carbonsäuren ist x in der Formel (I) vorzugsweise 1 und R''' in der Formel (II) bevorzugt der bezeichnete Kohlenwasserstoffrest. Diese organischen Ester gemäß b) sollen keine freien Hydroxyl- oder Carboxylgruppen enthalten; ihr Molekulargewicht (Zahlenmittel) liegt vorzugsweise unterhalb von 1900, insbesondere unterhalb von 1500;

c) organische Ketone der Formel $(R'-CO)_xR$, worin x die Zahl 1, 2 oder 3 repräsentiert, R ein Kohlenwasserstoffrest mit 2 bis 20, vorzugsweise 2 bis 16 Kohlenstoffatomen ist und R' ein Kohlenwasserstoffrest mit 2 bis 20, vorzugsweise 2 bis 16 Kohlenstoffatomen, der gegebenenfalls auch Ethergruppen enthalten kann, darstellt, wobei bei x = 2 oder 3 und die Reste R' gleich oder verschieden sein können, vorzugsweise jedoch die gleiche Bedeutung haben; x ist in vorstehender Formel bevorzugt 2 oder 3, insbesondere 2, R bevorzugt ein aliphatischer oder araliphatischer Rest, insbesondere ein aliphatischer Rest und R' bevorzugt ein unsubstituierter oder substituierter aromatischer Rest, wobei die Substituenten vorzugsweise Alkyl($C_1$-$C_6$) oder Oxyalkyl($C_1$-$C_6$) sind;

d) organische Sulfone der Formel R-SOO-R;

e) organische Sulfoxide der Formel $R_2$-SO;

f) organische Nitrile der Formel R-CN;

g) organische Amide der Formel R-CO-NR'R oder $R-SO_2$-NR'R,

wobei in den Formeln d) bis g) jeder Rest R die gleiche Bedeutung haben kann oder verschieden sein kann von jedem anderem Rest R und einen Kohlenwasserstoffrest mit 1 bis 25, vorzugsweise 5 bis 18 Kohlenstoffatomen darstellt und R' für den gleichen Rest oder für Wasserstoff steht;

h) organische Acetale oder Etheracetale der Formel $(R'O_x)_yR''$, worin x 1 oder 2 ist und y ganze Zahlen zwischen 1 und 6 repräsentiert, mit der Maßgabe, daß bei x = 1 y mindestens 2 ist, R'' ein Kohlenwasserstoffrest mit 1 bis 10, vorzugsweise 1 bis 6 Kohlenstoffatomen ist und R' einen Kohlenwasserstoffrest mit 2 bis 20, vorzugsweise 2 bis 12 Kohlenstoffatomen darstellt, wobei R' bei y >1 jeweils gleich oder verschieden sein kann; bevorzugt ist in vorstehender Formel x = 1 und y = 4 oder x = 2 und y = 2;

Es können auch Gemische aus verschiedenen Kristallisationsbeschleunigern zum Einsatz kommen.

Bevorzugte Ester gemäß a) und b) sind solche, die mindestens einen aromatischen Kern enthalten und in denen die aromatischen, araliphatischen oder aliphatischen Carbonsäuren 1 bis 3 Carboxylgruppen besitzen. Wenn die Carbonsäuren 2 oder mehrere Carboxylgruppen aufweisen, so sind alle Carboxylgruppen unter Bildung von Esterbindungen umgesetzt, d.h. in dem Ester liegen keine freien Carboxylgruppen vor. Gleichzeitig sind auch alle Hydroxylgruppen der Alkohole unter Bildung von Esterbindungen umgesetzt, d.h. in dem Ester liegen auch keine freien Hydroxylgruppen vor.

Bevorzugte Ketone, Sulfone, Sulfoxide, Nitrile, Amide und Acetale oder Etheracetale sind solche, die mindestens einen aromatischen Kern enthalten.

Bevorzugte Kristallisationsbeschleuniger des Typs a) bis c) und h) sind weiterhin solche, deren Molekülstruktur derartig ist, daß ein flexibler (aliphatischer) Mittelteil Flügelgruppen trägt, die aromatische Reste enthalten. Beispiele hierfür sind Dibenzyladipat, 1,8-Dibenzoyloctan, 1,4-Dibenzoylbutan, Di(2-phenoxyethyl)adipat und Di(2-phenoxyethyl)sebacat.

Spezielle Verbindungen, die unter diese Definition fallen, sind zum Beispiel: Dibenzylterephthalat, Di(2-phenoxyethyl)terephthalat, Dicyclohexylphthalat, Dicyclohexylterephthalat, Neopentylglykoldibenzoat, Neopentylglykoldianisoat, Trimethylolpropantribenzoat, Pentaerythrittetrabenzoat, Dipropylenglykoldibenzoat, Dibenzyladipat, Di(2-phenoxyethyl)adipat, Di(2-phenoxyethyl)sebacat, 1,4-Dibenzoylbutan, 1,4- Di(4'-toluoyl)-butan, 1,4-Di(2',5'-xyloyl)butan, 1,8-Dibenzoyloctan, Benzophenon, Diphenylsulfon.

Die Kristallisationsbeschleuniger werden erfindungsgemäß bevorzugt in einer Menge eingesetzt, die ausreicht, um die Nachkristallisationstemperatur ($T_N$ bzw. $T_N^*$) der schnellkristallisierenden Polymermassen gegenüber einer sonst gleichen Zusammensetzung mit gleichem Molekulargewicht, aber ohne den Kristallisationsbeschleuniger, um 4°C bis 50°C, vorzugsweise um 6°C bis 30°C und insbesondere 9°C bis 20°C abzusenken.

Der in der zweiten Verfahrensstufe bevorzugt zugegebene nichtnukleierte Polyester kann nach beliebigen Verfahren hergestellt werden, vorzugsweise jedoch gleichfalls nach dem Umesterungs-/Polykondensationsverfahren.

Den schnellkristallisierenden Polyestermassen können zusätzlich noch die bekannten Verstärkungsmittel, wie z.B. Glasfasern, Kohlefasern, Metallcarbidfasern, Glaskugeln udgl. zugegeben werden, wie sie beispielsweise in der DE-Patentschrift 2.920.246 und der US-Patentschrift 4.483.955 beschrieben sind. Deren Menge liegt im allgemeinen zwischen 0 und 300 Teilen, vorzugsweise zwischen 0 und 150 Teilen pro 100 Teilen des gesamten Polyesters. Die Zugabe dieser Zusätze kann an jeder geeigneten Stelle im Verlauf der Herstellung der schnellkristallisierenden Polyestermassen erfolgen.

Weiter können die schnellkristallisierenden Polyestermassen bekannte Zusatzstoffe, wie z.B. Füllstoffe, Flammschutzmittel, Schlagzähmodifikatoren, Stabilisatoren, Formtrennmittel, Antistatika oder ähnliches, enthalten. Derartige Zusatzstoffe sind beispielsweise in der DE-Patentschrift 2.920.246 oder in R. Gächter, H. Müller, Kunststoffadditive, Carl Hauser Verlag 1983 (München, Wien) beschrieben.

Die erfindungsgemäß erhältlichen Formmassen erlauben die Herstellong wärmeformbeständiger Formkörper mit großer Dimensionsstabilität, wie beispielsweise Zahn- und Kegelräder, Zahnstangen, Kupplungsscheiben, Führungselemente, Bauteile für elektronische Geräte udgl..

Als Maß für die Molekulargewichte der untersuchten Polyesterproben wird deren reduzierte spezifische Lösungsviskosität $\eta_{spez.}$ angesehen, bestimmt an einprozentigen Lösungen der Proben in Dichloressigsäure (c = 1 g/dl) bei 25°C. Zur Meßmethode s.a. M. Hofmann, H. Krömer, R. Kuhn, Polymeranalytik I, Georg Thieme Verlag, Stuttgart (1977). Aus den gemessenen Laufzeiten von Lösung (t) und Lösungsmittel ($t_o$) ergibt sich mit der Gewichtsfraktion des in der jeweiligen Probe enthaltenden Polyesters x (hierzu zählen sowohl nokleierter, hochnukleierter und nichtnukleierter Polyester) die reduzierte spezifische Lösungsviskosität nach folgender Formel:

$$\eta_{red.} = \frac{\frac{t-t_o}{t_o} - 1}{c \cdot x}$$

Die Beurteilung des Kristallisationsverhaltens erfolgte differentialkalorimetrisch mit Hilfe des Gerätes DSC-2C der Firma Perkin-Elmer. Zur Erzielung einer jeweils gleichen thermischen Vorgeschichte wurden alle Proben (gemahlenes Granulat) vor dem Messen jeweils 5 min bei 290°C unter Stickstoffatmosphäre aufgeschmolzen und anschließend auf 0°C abgeschreckt. Im anschließenden Meßzyklus wurden die Proben mit 10°C/min unter Stickstoffatmosphäre von Raumtemperatur auf 290°C aufgeheist und dann direkt mit 20°C/min abgekühlt. Beim Aufheizen der abgeschreckten Proben tritt im Meßzyklus ein exothermer Kristallisationspeak auf, dessen Maximum im folgenden als Nachkristallisatonstemperatur $T_N$ bezeichnet wird. Beim Abkühlen aus der Schmelze zeigt die Probe ebenso einen Kristallisationspeak, dessen Maximum im folgenden als Rekristallisationstemperatur $T_R$ bezeichnet wird.

Bekannt ist, daß das Kristallisationsverhalten vom Molekulargewicht des Polyesters und damit von dessen Lösungsviskosität abhängt (S.H. Ahorni, J. Appl. Polym. Sci. 29, 853 (1984), R. Legras u.a., Polymer 25, 833 (1984), P. Bier u.a., Angew. Makromol. Chem. 65, 1 (1977)). Direkt vergleichbar sind damit nur solche Meßwerte, die an Proben mit jeweils gleichem Molekulargewicht bzw. mit gleicher Lösungsviskosität gemessen wurden. Bei Proben unterschiedlichen Molekulargewichts müssen die gemessenen Werte $T_N$ und $T_R$ für vergleichende Betrachtungen zuvor umgerechnet werden auf jeweils gleiches Molekulargewicht bzw. gleiche Lösungsviskosität. Die berechneten Werte werden in den Beispielen mit $T_N^*$ und $T_R^*$ bezeichnet. Die der Umrechnung zugrunde liegenden jeweiligen Abhägigkeiten der Nach- und Rekristallisationstemperaturen von der Lösungsviskosität wurden zuvor separat bestimmt.

Das Kristallisationsverhalten des Polyesters ist nun umso besser, je höher $T_R$ ($T_R^*$) und je niedriger $T_N$ - ($T_N^*$) liegen. Diese beiden Temperaturen sind in gewisser Weise ein Maß dafür, in welchem Temperaturbereich die Kristallisation des Polyesters ablaufen kann. Nukleierte Proben zeigen gegenüber nichtnukleierten Proben gleichen Molekulargewichts sowohl höhere Rekristallisationstemperaturen als auch niedrigere Nachkristallisationstemperaturen und damit bereits ein verbessertes Kristallisationsverhalten. Durch den weiteren Zusatz von organischen Kristallisationsbeschleunigern bleibt die Rekristallisationstemperatur praktisch unbeeinflußt, die Nachkristallisationstemperatur wird aber weiter abgesenkt, das heißt die Kristallisation kann nun auch bei noch tieferen Temperaturen erfolgen. Damit wird gleichzeitig auch das Verarbeitungsverhalten des Polyesters weiter verbessert. Im Spritzgießverfahren können nun z.B. niedrigere Temperaturen angewendet werden; Formtrennverhalten und Oberflächenglanz des Formteils werden günstig beeinflußt.

Die erfindungsgemäßen Vorteile bei Anwendung des neuen Verfahrens zur Herstellung kristallisationsbeschleunigter Polyestermassen werden mit Hilfe der folgenden Beispiele aufgezeigt.

Die katalytische Wirksamkeit der eingesetzten Natrium-Verbindungen und die damit verbundenen Vorteile bezüglich der Umesterungszeiten und damit der Reaktorstandzeiten bei der Herstellung der nukleierten und der hochnukleierten Polyester nach dem erfindungsgemäßen Verfahren geht aus den Beispielen 1a bis 5a und Vergleichsbeispiel 1 hervor.

Der geringere Molekulargewichtsabbau - bei gleichzeitig hervorragender Kristallisationseigenschaften - bei den nach dem erfindungsgemäßen Verfahren erhältlichen Polyestern gegenüber nach der herkömmlichen Art hergestellten Polyestern seigt sich deutlich beim Vergleich der Beispiele 1b bis 5b mit den Vergleichsbeispielen 2 bis 5. Der Einfluß des Kristallisationsbeschleunigers in diesen Zusammensetzungen geht aus einem Vergleich mit Beispiel 2 a) und den Vergleichsbeispielen 6 und 7 hervor.

Die vorteilhafte Anwendung des erfindungsgemäßen Verfahrens zur Herstellung schnellkristallisierender Polyestermassen unter Verwendung weiterer organischer Kristallisationsbeschleuniger wird mit den Beispielen 17 bis 22 aufgezeigt.

Beispiel 1

a) 15,0 kg Dimethylterephthalat wurden mit 11,0 kg Ethylenglykol in Gegenwart von 5,0 g Manganacetattetrahydrat und 11,1 g Natrium, eingesetzt als Natriumglycolat, unter Rühren und Stickstoffüberleiten bei 180 - 225°C unter Methanolabspaltung umgesetzt. Die Umesterung war nach 105 min beendet. Danach wurden 1,6 g Phosphorsäure und 5,8 g Antimontrioxid hinzugegeben, die Temperatur innerhalb einer weiteren Stunde auf 275°C gesteigert und gleichzeitig die Apparatur auf $2\times10^{-4}$ bar evakuiert. Nach weiteren 130 min bei $2\times10^{-4}$ bar und 275°C wurde ein nukleiertes Polyethylenterephthalat mit einer reduzierten spezifischen Viskosität $\eta_{red.}$ von 0,82 dl/g erhalten.

b) In einem geeigneten Compoundierextruder wurden bei 280°C Massetemperatur 6 Teile Neopentylglykoldibenzoat in je 100 Teile des vorstehend beschriebenen Polyesters eingearbeitet und anschließend granuliert. Die reduzierte spezifische Lösungsviskosität des Granulats sowie dessen Kristallisationsverhalten sind in Tabelle 2 aufgeführt.

Beispiel 2

a) Es wurde wie in Beispiel 1 a) verfahren, wobei jedoch 11,1 g Natrium in Form von wasserfreiem Natriumacetat eingesetzt wurden. Die Umesterungszeit, die Polykondensationszeit und die reduzierte spezifische Viskosität des erhaltenen Polyesters sind aus Tabelle 1 ersichtlich.

b) Es wurde wie in Beispiel 1 b) verfahren, jedoch wurden 6 Teile Neopentylglykoldibenzoat je 100 Teile des vorstehenden Polyesters eingesetzt. Die reduzierte spezifische Lösungsviskosität des Polyesters sowie dessen Kristallisationsverhalten gehen wiederum aus Tabelle 2 hervor.

Beispiele 3 bis 5

a) Die Durchführung erfolgte wie in Beispiel 1 a), die Menge an Natrium betrug jedoch 88,8 g, eingesetzt als Natriumglykolat (Beispiel 3 a)), wasserfreies Natriumacetat (Beispiel 4 a)) und wasserfreies Natriumcarbonat (Beispiel 5 a)). Bezüglich der Polykondensationszeiten und der reduzierten spezifischen Viskositäten siehe Tabelle 1.

b) Unter den gleichen Bedingungen wie im Beispiel 1 b) wurden 6 Teile Neopentylglykoldibenzoat zusammen mit 12,5 Teilen des Polyesters aus Beispiel 3 a) in je 87,5 Teile eines nichtnukleierten Polyesters, hergestellt nach der Rezeptur des folgenden Vergleichsbeispiels 1, mit der reduzierten spezifischen Lösungsviskosität $\eta_{red.}$ = 0,82 dl/g, eingearbeitet und anschließend granuliert. Die reduzierte spezifische Lösungsviskosität des Granulats sowie dessen Kristallisationsverhalten sind in Tabelle 2 aufgeführt.

Vorstehende Verfahrensweise wurde wiederholt, jedoch mit 12,5 Teilen des Polyesters aus Beispiel 4 a) ( + Beispiel 4) bzw. 12,5 Teilen des Polyesters aus Beispiel 5 a) ( + Beispiel 5) statt des Polyesters aus Beispiel 3 a).

Vergleichsbeispiel 1

Es wurde wie in Beispiel 1 a) verfahren, jedoch ohne Zusatz von Natrium. Bezüglich Umesterungszeit, Polykondensationszeit und reduzierter spezifischer Viskosität siehe Tabelle 1.

Vergleichsbeispiele 2 - 5

Unter den gleichen Bedingungen wie in den Beispielen 1 b) bis 5 b) wurden 6 Teile Neopentylglykoldibenzoat zusammen mit 0,26 Teilen wasserfreiem Natriumacetat (Vgl.-Beispiel 2), 0,17 Teilen wasserfreiem Natriumcarbonat (Vgl.-Beispiel 3), bzw. 1,0 Teil Natriumstearat (Vgl.-Beispiel 4) bzw. 1,6 Teilen Natriummontanat (Vgl.-Beispiel 5) in je 100 Teile des gleichen nichtnukleierten Polyesters wie in den Beispielen 3 - 5 eingearbeitet und anschließend granuliert. Die reduzierte spezifische Lösungsviskosität des Granulats sowie desen Kristallisationsverhalten sind in Tabelle 2 aufgeführt.

Vergleichsbeispiel 6

In einem geeigneten Compoundierextruder wurden bei 280°C Massetemperatur 12,5 Teile des Polyesters aus Beispiel 4 a) in je 87,5 Teile des gleichen nichtnukleierten Polyesters wie in den Beispielen 3 bis 5 eingearbeitet und anschließend granuliert. Die reduzierte spezifische Lösungsviskosität des Ganulats sowie dessen Kristallisationsverhalten sind in Tabelle 2 aufgeführt.

Vergleichsbeispiel 7

Unter den gleichen Bedingungen wie in Vergleichsbeispiel 6 wurden 1,0 Teile Natriumstearat je 100 Teile des gleichen nichtnukleierten Polyesters eingearbeitet und granuliert. Die spezifische Lösungsviskosität des Granulats sowie dessen Kristallisationsverhalten sind in Tabelle 2 aufgeführt.

Beispiel 6

30,0 kg Dimethylterephthalat wurden mit 22,0 kg Ethylenglykol in Gegenwart von 10,0 g Manganacetattetrahydrat und 630 g wasserfreiem Natriumacetat unter Rühren und Stickstoffeinheiten bei 180 - 225°C unter Methanolspaltung umgeestert. Die Umesterung war nach 2 Stunden beendet. Danach wurden 3,2 g Phosphorsäure und 11,6 g Antimontrioxid hinzugegeben, die Temperatur innerhalb einer weiteren Stunde auf 275°C gesteigert und gleichzeitig die Apparatur auf $3 \times 10^{-4}$ bar evakuiert. Nach weiteren 235 min bei $3 \times 10^{-4}$ bar wurde ein hochnukleiertes Polyethylenterphthalat mit einer reduzierten spezifischen Viskosität $\eta_{red} = 0,83$ dl/g erhalten.

Beispiele 7 - 9

In einem geeigneten Compoundierextruder wurden bei 280°C Massetemperatur jeweils 6 Teile der in Tabelle 3 angegebenen organischen Kristallisationsbeschleuniger zusammen mit 12,5 Teilen des Polyesters aus Beispiel 3a) in je 87,5 Teile eines nichtnukleierten Polyesters mit einer reduzierten spezfischen Lösungsviskosität $\eta_{red} = 0,82$ dl/g, hergestellt nach der Rezeptur des Vergleichsbeispiels 1, eingearbeitet und granuliert. Die reduzierte spezifische Lösungsviskosität des Granulats sowie dessen Kristallisationsverhalten sind in Tabelle 3 aufgeführt.

Beispiele 10 - 22

Wie Beispiele 7 bis 9, jedoch mit 12,5 Teilen des Polyesters aus Beispiel 6 statt der 12,5 Teile des Polyesters aus Beispiel 3a).

Tabelle 1: Einfluß der Natriumverbindungen auf die Umesterungszeiten

| | Menge an eingesetztem Natrium | | Natrium eingesetzt als | Umesterungszeit | Polykondensationszeit | $\eta_{red}$ |
|---|---|---|---|---|---|---|
| | g/kg PET | mMol/kg PET | | h:min | h:min | dl/g |
| Beispiel 1 a) | 0,73 | 32 | Na-glykolat | 1:45 | 3:10 | 0,82 |
| " 2 a) | 0,73 | 32 | Na-acetat | 1:45 | 3:15 | 0,83 |
| " 3 a) | 5,86 | 255 | Na-glykolat | 1:45 | 3:10 | 0,81 |
| " 4 a) | 5,86 | 255 | Na-acetat | 1:45 | 3:15 | 0,83 |
| " 5 a) | 5,86 | 255 | Na-carbonat | 1:45 | 3:15 | 0,83 |
| Vergleichsbeispiel 1 | — | — | — | 2:00 | 3:15 | 0,82 |

EP 0 214 581 B1

Tabelle 2: Einfluß des Verfahrens der Nukleierung auf die Lösungsviskosität und das Kristallisationsverhalten

| Verfahren der Nukleierung | Beispiel/ Vergleichsbeisp. | eingesetzte Na-Verbindung | $\eta_{red}$ dl/g | $T_N$ °C | $T_n$* [1] °C | $T_R$ °C | $T_R$* [1] °C |
|---|---|---|---|---|---|---|---|
| erfindungs-gemäß | Beispiel 1 b) | Na-glykolat | 0,75 | 110 | 108 | 210 | 211 |
| | " 2 b) | Na-acetat | 0,76 | 110 | 107,5 | 209 | 210 |
| erfindungs-gemäß | Beispiel 3 b) | Na-glykolat | 0,75 | 110 | 108 | 209 | 210 |
| | " 4 b) | Na-acetat | 0,76 | 110 | 107,5 | 210 | 211 |
| | " 5 b) | Na-carbonat | 0,76 | 111 | 108,5 | 211 | 212 |
| Vergleich (nachträgliche Zugabe) | Vgl.Beisp. 2 | Na-acetat | 0,69 | 108 | 108 | 211 | 211 |
| | " 3 | Na-carbonat | 0,70 | 108 | 108 | 210 | 210 |
| | " 4 | Na-stearat | 0,58 | 102 | 107 | 212 | 209,5 |
| | " 5 | Na-montanat | 0,62 | 104 | 107,5 | 211 | 209,5 |
| Vergleich (einstufig bzw. zweistufig ohne Kristallisations-beschleuniger) | Beisp. 2 a) | Na-acetat | 0,83 | 124 | 122 | 206 | 210 |
| | Vgl.Beisp. 6 | Na-acetat | 0,76 | 123 | 122 | 208 | 210 |
| | Vgl.Beisp. 7 | Na-stearat | 0,58 | 114 | 115 | 212,5 | 208 |

1) umgerechnete Werte auf $\eta_{red}$ = 0,70 dl/g

EP 0 214 581 B1

**Tabelle 3**

| Beispiel | Organ. Kristallisations-beschleuniger | $\eta_{red}$ dl/g | $T_N$ °C | $\Delta T_N$ [1] °C | $T_R$ °C |
|---|---|---|---|---|---|
| 3 b) | Neopentylglykoldibenzoat | 0,75 | 110 | 13 | 209 |
| 7 | Dibenzylterephthalat | 0,75 | 114 | 9 | 211 |
| 8 | Dibenzyladipat | 0,77 | 105 | 18,5 | 211 |
| 9 | Di(2-phenoxyethyl)-terephthalat | 0,75 | 110 | 13 | 211 |
| 10 | " | 0,76 | 111 | 12 | 211 |
| 11 | Di(2-phenoxyethyl)adipat | 0,75 | 107 | 16 | 212 |
| 12 | Di(2-phenoxyethyl)sebacat | 0,74 | 107 | 16 | 212 |
| 13 | 1,4-Dibenzoylbutan | 0,73 | 109 | 13,5 | 211 |
| 14 | 1,4-Di(4'toluoyl)butan | 0,75 | 112 | 11 | 211 |
| 15 | 1,4-Di(2',5'-xyluol)butan | 0,76 | 113 | 10 | 209 |
| 16 | 1,8-Dibenzoyloctan | 0,77 | 108 | 15,5 | 210 |
| 17 | Neopentylglykoldianisoat | 0,74 | 113 | 10 | 208 |
| 18 | Dicyclohexylphthalat | 0,76 | 113 | 10 | 209 |
| 19 | Dicyclohexlyterephthalat | 0,75 | 113 | 10 | 212 |
| 20 | Trimethylolpropantribenzoat | 0,76 | 114 | 9 | 210 |
| 21 | Pentaerythrittetrabenzoat | 0,75 | 114 | 9 | 212 |
| 22 | Dibenzylidenpentaerythrit [2] | 0,77 | 116 | 7,5 | 209 |

1) $\Delta T_N$: Absenkung der Nachristallisationstemperatur durch Zusatz des organ. Kirstallisationsbeschleunigers aus einem Vergleich mit der Nachkristallisationstemperatur einer äquivalenten Zusammensetzung gleicher Lösungsvikosität ohne organischen Kristallisationsbeschleuniger

2) 3,9-Diphenyl-2,4,8,10-tetraoxaspiro (5.5) undecan

**Patentansprüche**

1. Verfahren zur Herstellung von schnellkristallisierenden Polyestern nach dem Veresterungs-/Polykondensationsverfahren und/oder dem Umesterungs-/Polykondensationsverfahren, wobei zumindest ein Teil des Polyesters in Gegenwart von Alkalimetall oder einer Alkalimetall-Verbindung hergestellt wird, dadurch gekennzeichnet, daß zunächst in einer ersten Stufe die Herstellung eines nukleierten oder hochnukleierten Polyesters in Gegenwart von Alkalimetall oder einer Alkalimetall-Verbindung erfolgt und daß anschließend in einer zweiten Stufe diesem Polyester gegebenenfalls weiterer nicht nukleierter Polyester sowie ein Kristallisationsbeschleuniger zugegeben werden, wobei der letztere ausgewählt ist aus der Gruppe

a) organische Ester ohne freie Hydroxyl- oder Carboxylgruppen, bestehend aus einer aromatischen oder araliphatischen Carbonsäure mit 7 bis 13 Kohlenstoffatomen, enthaltend mindestens eine Carboxylgruppe pro aromatischem Kern und einem Alkohol, der Formel (HOCH₂)ₓR', worin x die Zahl 1, 2, 3 oder 4 repräsentiert und R' ein Kohlenwasserstoffrest mit 2 bis 15 Kohlenstoffatomen ist oder einem Alkohol der For mel $HO(R''O)_yR'''$, worin y eine ganze Zahl zwischen 1 und 15 ist, R'' ein Kohlenwasserstoffrest mit 2 bis 15 Kohlenstoffatomen ist und R''' ein Wasserstoffatom oder einen Kohlenwasserstoffrest mit 2 bis 20 Kohlenstoffatomen darstellt,

b) organische Ester ohne freie Hydroxyl- oder Carboxylgruppen bestehend aus einer aliphatischen Carbonsäure mit 2 bis 12 Kohlenstoffatomen, enthaltend mindestens eine Carboxylgruppe und einem Alkohol der Formel $(HOCH_2)_x$ R', worin x die Zahl 1, 2, 3 oder 4 repräsentiert und R' ein Kohlenwasserstoffrest mit 2 - 15 Kohlenstoffatomen ist oder eines Alkohols der Formel $HO(R''O)_yR'''$, worin y eine ganze Zahl zwischen 1 und 15 ist, R'' ein Kohlenwasserstoffrest mit 2 bis 15 Kohlenstoffatomen ist und R''' ein Wasserstoffatom oder einen Kohlenwasserstoffrest mit 2 bis 20 Kohlenstoffatomen darstellt,

c) organische Ketone der Formel $(R'-CO)_xR$, worin x die Zahl 1, 2 oder 3 repräsentiert, R ein Kohlenwasserstoffrest mit 2 - 20 Kohlenstoffatomen ist und R' einen Kohlenwasserstoffrest mit 2 - 20 Kohlenstoffatomen darstellt, wobei die Reste R' gleich oder verschieden sein können,

d) organische Sulfone der Formel R-SOO-R,

e) organische Sulfoxide der Formel $R_2$-SO,

f) organische Nitrile der Formel R-CN,

g) organische Amide der Formel H-CO-NR'R oder $R-SO_2NR'R$, wobei in den Formeln d) bis g) jeder Rest R die gleiche Bedeutung haben kann oder verschieden sein kann von jedem anderen Rest R und einen Kohlenwasserstoffrest mit 1 bis 25 Kohlenstoffatomen darstellt und R' für den gleichen Rest oder für Wasserstoff steht,

h) organische Acetale oder Etheracetale der Formel $(R'O_x)_yR''$, worin x 1 oder 2 ist und y ganze Zahlen zwischen 1 und 6 repräsentiert, mit der Maßgabe, daß bei x = 1 y mindestens 2 ist, R'' ein Kohlenwasserstoffrest mit 1 bis 10 Kohlenstoffatomen ist und R' einen Kohlenwasserstoffrest mit 2 bis 20 Kohlenstoffatomen darstellt, wobei R' bei y> 1 gleich oder verschieden sein kann, oder einem Gemisch dieser Verbindungen,

und der Kristallisationsbeschleuniger einen Siedepunkt von höher als 150° C bei einem Druck von $10^{-3}$ bar aufweist, sowie keine freien Hydroxyl- oder Carboxylgruppen enthält, wobei die Menge des Beschleunigers so groß ist, daß die Nachkristallisationstemperatur gegenüber derjenigen des Polyesters ohne diesen organischen Kristallisationsbeschleuniger um mindestens 4° C erniedrigt ist.

2. Verfahren nach Anspruch 1, dadurch gekennzeichnet, daß die Menge an Alkalimetall oder der Alkalimetall-Verbindung in der ersten Stufe $2 \cdot 10^{-2}$ bis 1 mol pro kg des hochnukleierten Polyesters beträgt und daß in der zweiten Stufe nichtnukleierter Polyester gleicher oder anderer chemischer Zusammensetzung zugegeben wird.

3. Verfahren nach Anspruch 2, dadurch gekennzeichnet, daß die Menge an Alkalimetall oder an Alkalimetall-Verbindung $5 \cdot 10^{-2}$ bis $6 \cdot 10^{-1}$ mol pro kg des hochnukleierten Polyesters beträgt.

4. Verfahren nach Anspruch 2 und/oder 3, dadurch gekennzeichnet, daß die Menge des in der zweiten Stufe zugegebenen nichtnukleierten Polyesters so groß ist, daß die Menge an Alkali in dem schnellkristallisierenden Polyester $2 \cdot 10^{-3}$ bis 0,1 mol pro kg dieses Polyesters beträgt.

5. Verfahren nach einem oder mehreren der Ansprüche 1 bis 4, dadurch gekennzeichnet, daß zur Herstellung des Polyesters gemäß der ersten Verfahrensstufe das Umesterungs-/Polykondensationsverfahren angewendet wird.

6. Verfahren nach einem oder mehreren der Ansprüche 1 bis 5, dadurch gekennzeichnet, daß der Polyester Polybutylenterephthalat und/oder Polyethylenterephthalat ist.

7. Verfahren nach einem oder mehreren der Ansprüche 1 bis 6, dadurch gekennzeichnet, daß der in der zweiten Stufe zugegebene Polyester aus einer Mischung aus Polyethylenterephthalat und/oder Polybutylenterephthalat und/oder anderen Polyestern, und/oder anderen thermoplastisch verarbeitbaren Polymeren besteht.

8. Verfahren nach einem oder mehreren der Ansprüche 1 bis 7, dadurch gekennzeichnet, daß der in der zweiten Verfahrensstufe eingesetzte Kristallisationsbeschleuniger ausgewählt ist aus der Gruppe

a) organische Ester nach Anspruch 1(a), bei denen R' in dem Alkohol der Formel $(HOCH_2)_xR'$ ein Kohlenwasserstoffrest mit 2 bis 12 Kohlenstoffatomen ist oder in dem Alkohol der Formel $HO(R''O)_yR'''$ y eine ganze Zahl zwischen 2 und 8 ist, R'' ein Kohlenwasserstoffrest mit 2 bis 8 Kohlenstoffatomen ist und R''' ein Wasserstoffatom oder einen Kohlenwasserstoffrest mit 2 bis 12 Kohlenstoffatomen darstellt,

b) organische Ester nach Anspruch 1(b) bei denen R' in dem Alkohol der Formel $(HOCH_2)_xR'$ ein Kohlenwasserstoffrest mit 2 bis 12 Kohlenwasserstoffatomen ist oder in dem Alkohol der Formel $HO(R''O)_yR'''$, worin y eine ganze Zahl zwischen 1 und 8 ist und R'' ein Kohlenwasserstoffrest mit 2 bis 8 Kohlenstoffatomen ist,

c) organische Ketone nach Anspruch 1(c), worin in der Formel $(R'-CO)_xR$ R und R' jeweils ein Kohlenwasserstoffrest mit 2 bis 16 Kohlenstoffatomen ist und wobei die Reste R' gleich sein können,

h) organische Acetale oder Etheracetale nach Anspruch 1(h) der Formel $(R'O_x)_yR''$, worin R'' ein Kohlenwasserstoffrest mit 1 bis 6 Kohlenstoffatomen ist und R' einen Kohlenwasserstoffrest mit 2 bis 12 Kohlenstoffatomen darstellt.

**9.** Verfahren nach einem oder mehreren der Ansprüche 1 bis 8, dadurch gekennzeichnet, daß der Kristallisationsbeschleuniger mindestens einen aromatischen Kern enthält.

**10.** Verfahren nach einem oder mehreren der Ansprüche 1 bis 9, dadurch gekennzeichnet, daß zusätzlich Verstärkungsmittel oder andere Zusatzstoffe in Mengen bis zu 300 Teilen pro 100 Teile Polyester zugemischt werden.

**11.** Verfahren nach einem oder mehreren der Ansprüche 1 bis 10, dadurch gekennzeichnet, daß als Alkalimetall Natrium und als Alkalimetall-Verbindung Natriumcarbonat, Natriumhydrogencarbonat, Natriumhydroxid, Natriumsalze von Mono- oder polycarbonsäuren oder Natriumalkoholate eingesetzt werden.

**12.** Formmasse auf Basis von Polyester mit einer reduzierten spezifischen Viskosität (gemessen in 1 %iger Lösung in Dichloressigsäure bei 25°C) von mindestens 0,3 dl/g, dessen Carboxyl-Endgruppen zumindest teilweise in Alkalimetallcarboxylat-Endgruppen umgewandelt sind, gekennzeichnet durch einen Gehalt an

a) einem Kristallisationsbeschleuniger nach Anspruch 1(a) - 1(h) in einer Menge, die ausreicht, um die Nachkristallisationstemperatur gegenüber derjenigen des Polyesters ohne diesen Kristallisationsbeschleuniger um mindestens 4°C zu erniedrigen, und

b) einer Alkalimetall-Verbindung,

## Claims

**1.** A process for the preparation of rapidly crystallizing polyesters by the esterification/polycondensation method and/or the transesterification/polycondensation method, at least some of the polyester being prepared in the presence of an alkali metal or of an alkali metal compound, wherein, in a first stage, a nucleated or highly nucleated polyester is first prepared in the presence of an alkali metal or of an alkali metal compound, and then, in a second stage, further non-nucleated polyesters and a crystallization accelerator are, if appropriate, added to this polyester, the crystallization accelerator being selected from the group consisting of

a) organic esters without free hydroxyl or carboxyl groups and composed of an aromatic or araliphatic carboxylic acid having 7 to 13 carbon atoms, containing at least one carboxyl group per aromatic nucleus, and an alcohol of the formula $(HOCH_2)_xR'$, wherein x represents 1, 2, 3 or 4 and R' is a hydrocarbon radical having 2 to 15 carbon atoms, or an alcohol of the formula $HO(R''O)_yR'''$, wherein y is an integer between 1 and 15, R'' is a hydrocarbon radical having 2 to 15 carbon atoms, and R''' represents a hydrogen atom or a hydrocarbon radical having 2 to 20 carbon atoms,

b) organic esters without free hydroxyl or carboxyl groups and composed of an aliphatic carboxylic acid having 2 to 12 carbon atoms, containing at least one carboxyl group, and an alcohol of the formula $(HOCH_2)_xR'$, wherein x represents 1, 2, 3 or 4 and R' is a hydrocarbon radical having 2 to 15 carbon atoms, or an alcohol of the formula $HO(R''O)_yR'''$, wherein y is an integer between 1 and 15, R'' is a hydrocarbon radical having 2 to 15 carbon atoms, and R''' represents a hydrogen atom or a hydrocarbon radical having 2 to 20 carbon atoms,

EP 0 214 581 B1

c) organic ketones of the formula $(R'-CO)_x R$, wherein x represents 1, 2 or 3, R is a hydrocarbon radical having 2 - 20 carbon atoms and R' represents a hydrocarbon radical having 2 - 20 carbon atoms, and the radicals R' may be identical or different,

d) organic sulfones of the formula R-SOO-R,

e) organic sulfoxides of the formula $R_2$-SO,

f) organic nitriles of the formula R-CN,

g) organic amides of the formula R-CO-NR'R or $R-SO_2 NR'R$,

wherein, in the formulae d) to g), each radical R can have the same meaning or can be different from every other radical R and represents a hydrocarbon radical having 1 to 25 carbon atoms, and R' represents the same radical or hydrogen,

h) organic acetals or etheracetals of the formula $(R'O_x)_y R''$, wherein x is 1 or 2 and y represents integers between 1 and 6, with the proviso that, when x = 1, y is at least 2, R'' is a hydrocarbon radical having 1 to 10 carbon atoms and R' represents a hydrocarbon radical having 2 to 20 carbon atoms, and, when y > 1, the radicals R' may be identical or different,

or a mixture of these compounds,

and the crystallization accelerator has a boiling point of greater than 150°C at a pressure of $10^{-3}$ bar and contains no free hydroxyl or carboxyl groups, the amount of the accelerator being sufficiently large to reduce the post-crystallization temperature by at least 4°C compared with that of the polyester without this organic crystallization accelerator.

2. A process as claimed in claim 1, wherein the amount of alkali metal or of alkali metal compound in the first stage is $2 \cdot 10^{-2}$ to 1 mole per kg of the highly nucleated polyester, and wherein non-nucleated polyester having the same or a different chemical composition is added in the second stage.

3. A process as claimed in claim 2, wherein the amount of alkali metal or of alkali metal compound is $5 \cdot 10^{-2}$ to $6 \cdot 10^{-1}$ mole per kg of the highly nucleated polyester.

4. A process as claimed in claim 2 and/or 3, wherein the amount of the non-nucleated polyester added in the second stage is such that the amount of alkali metal in the rapidly crystallizing polyester is $2 \cdot 10^{-3}$ to 0.1 mole per kg of this polyester.

5. A process as claimed in one or more of claims 1 to 4, wherein the transesterification/polycondensation method is used to prepare the polyester in the first process stage.

6. A process as claimed in one or more of claims 1 to 5, wherein the polyester is polybutylene terephthalate and/or polyethylene terephthalate.

7. A process as claimed in one or more of claims 1 to 6, wherein the polyester added in the second stage consists of a mixture of polyethylene terephthalate and/or polybutylene terephthalate and/or other polyesters, and/or other polymers which can be processed as thermoplastics.

8. A process as claimed in one or more of claims 1 to 7, wherein the crystallization accelerator employed in the second process stage is selected from the group consisting of

a) organic esters as in claim 1 (a), in which R' in the alcohol of the formula $(HOCH_2)_x R'$ is a hydrocarbon radical having 2 to 12 carbon atoms, or, in the alcohol of the formula $HO(R''O)_y R'''$, y is an integer between 2 and 8, R'' is a hydrocarbon radical having 2 to 8 carbon atoms and R''' is a hydrogen atom or represents a hydrocarbon radical having 2 to 12 carbon atoms,

b) organic eaters as in claim 1 (b), in which R' in the alcohol of the formula $(HOCH_2)_x R'$ is a hydrocarbon radical having 2 to 12 carbon atoms, or, in the alcohol of the formula $HO(R''O)_y R'''$, y is an integer between 1 and 8 and R'' is a hydrocarbon radical having 2 to 8 carbon atoms,

c) organic ketones as in claim 1 (c), in which, in the formula $(R'-CO)_x R$, R and R' are each a hydrocarbon radical having 2 to 16 carbon atoms, and the radicals R' may be the same,

h) organic acetals or etheracetals as in claim 1 (h), of the formula $(R'O_x)_y R''$, in which R'' is a hydrocarbon radical having 1 to 6 carbon atoms and R' represents a hydrocarbon radical having 2 to 12 carbon atoms.

9. A process as claimed in one or more of claims 1 to 8, wherein the crystallization accelerator contains at least one aromatic nucleus.

15

10. A process as claimed in one or more of claims 1 to 9, wherein reinforcing agents or other additives are also admixed in amounts of up to 300 parts per 100 parts of polyester.

11. A process as claimed in one or more of claims 1 to 10, wherein sodium is used as the alkali metal and sodium carbonate, sodium bicarbonate, sodium hydroxide, a sodium salt of a mono- or polycarboxylic acid or a sodium alcoholate is employed as the alkali metal compound.

12. A molding material which is based on a polyester which has a reduced specific viscosity (measured in 1% strength solution in dichloroacetic acid at 25°C) of at least 0.3 dl/g and at least some of whose terminal carboxyl groups have been converted to alkali metal carboxylate terminal groups, which contains

a) a crystallization accelerator as in claim 1 (a) - (h) in an amount which is sufficient to reduce the post-crystallization temperature by at least 4°C compared with that of the polyester without this crystallization accelerator, and

b) an alkali metal compound.

**Revendications**

1. Procédé pour la préparation de polyesters à cristallisation rapide selon le procédé d'estérification/polycondensation et/ou le procédé de transestérification/polycondensation, en préparant au moins une partie du polyester en présence de métal alcalin on d'un composé de métal alcalin, caractérisé en ce qu'on prépare d'abord, dans une première étape, un polyester nucléé ou hautement nucléé en présence de métal alcalin ou d'un composé de métal alcalin et en ce qu'on ajoute ensuite, à ce polyester, dans une deuxième étape, éventuellement d'autres polyesters non nucléés ainsi qu'un accélérateur de cristallisation, le dernier étant pris dans le groupe des

a) esters organiques sans groupes hydroxyle ou carboxyle libres, composés d'un acide carboxylique aromatique ou araliphatique comportant de 7 à 13 atomes de carbone, contenant au moins un groupe carboxyle par noyau aromatique et d'un alcool de formule $(HOCH_2)_xR'$ où x vaut 1, 2, 3 ou 4 et R' représente un radical hydrocarboné comportant de 2 à 15, de préférence de 2 à 12 atomes de carbone, ou d'un alcool de formule $HO(R''O)_yR'''$, où y vaut un nombre compris entre 1 et 15, R'' de représente un radical hydrocarboné comportant de 2 à 15 atomes de carbone, de préférence de 2 à 8 atomes de carbone et R''' représente un atome d'hydrogène ou un radical hydrocarboné comportant de 2 à 20 atomes de carbone ;

b) esters organiques sans groupes nydroxyle ou carboxyle libres, composés d'un acide carboxylique aliphatique comportant de 2 à 12 atomes de carbone, contenant au moins un groupe carboxyle, et d'un alcool de formule $(HOCH_2)_xR'$, où x vaut 1, 2, 3 ou 4 et R' représente un radical hydrocarboné comportant de 2 à 15, de préférence de 2 à 12 atomes de carbone, ou d'un alcool de formule $HO-(R''O)_yR'''$, où y vaut un nombre entier compris entre 1 et 15, R'' représente un radical hydrocarboné comportant de 2 à 15 atomes de carbone, et R''' représente un atome d'hydrogène ou un radical hydrocarboné comportant de 2 à 20 atomes de carbone ;

c) cétones organiques de formule $(R'-CO)_xR$, où x vaut 1, 2 ou 3, R un radical hydrocarboné comportant de 2 à 20 atomes de carbone et R' un radical hydrocarboné comportant de 2 à 20 atomes de carbone, les radicaux R' pouvant être identiques ou différents ;

d) sulfones organiques de formule R-SOO-R ;

e) sulfoxydes organiques de formule $R_2$-SO ;

f) nitriles organiques de formule R-CN ;

g) amides organiques de formule R-CO-NR'R ou $R-SO_2$-NR'R, dans les formules d) à g), chaque radical R pouvant avoir la même signification ou pouvant être différent de chacun des autres radicaux A et correspondant à un radical hydrocarboné comportant de 1 à 25, de préférence de 5 à 18 atomes de carbone et R' à un radical identique ou à l'hydrogène ;

h) acétals organiques ou éther-acétals de formule $(R'O_x)_yR''$, où x vaut 1 ou 2 et y vaut des nombres entiers compris entre 1 et 6, à la condition que, si x = 1, y vaut au moins 2, R'' représente un radical hydrocarboné comportant de 1 à 10, et R' représente un radical hydrocarboné comportant de 2 à 20, R' pour y >1 pouvant être identique ou différent ou un mélange de ces composés, et l'accélérateur de cristallisation a un point d'ébullition supérieur à 150 °C, à une pression de $10^{-3}$ bars ainsi qu'ils ne contiennent pas de groupes hydroxyle ou carboxyle libres, la quantité de l'accélérateur étant tellement grande que la température de post-cristallisation, par rapport à celle du polyester sans agent accélérateur de cristallisation organique, est réduite d'au moins 4 °C.

2. Procédé selon la revendication 1, caractérisé en ce que la quantité de métal alcalin ou de composé de métaux alcalins dans la première étape est de $2 \cdot 10^{-2}$ à 1 mole par kg de polyester hautement nucléé et en ce qu'on ajoute du polyester non nucléé de composition chimique identique ou différente, dans la deuxième étape.

3. Procédé selon la revendication 2, caractérisé en ce que la quantité de métal alcalin ou de composé de métaux alcalins est de $5 \cdot 10^{-2}$ à $6 \cdot 10^{-1}$ moles par kg du polyester hautement nucléé.

4. Procédé selon la revendication 2 et/ou 3, caractérisé en ce que la quantité du polyester non nucléé, ajoutée dans la deuxième étape, est tellement grande que la quantité d'alcali dans le polyester à cristallisation rapide est de $2 \cdot 10^{-3}$ à 0,1 mode par kg de ce polyester.

5. Procédé selon une ou plusieurs des revendications 1 à 4, caractérisé en ce que pour la préparation du polyester selon la première étape du procédé, on utilise le procédé de transestérification/polycondensation.

6. Procédé selon une ou plusieurs des revendications 1 à 5, caractérisé en ce que le polyester est le polybutylène-téraphtalate et/ou le polyéthylène-téréphtalate.

7. Procédé selon une ou plusieurs des revendications 1 à 6, caractérisé en ce que le polyester ajouté dans la deuxième étape se compose d'un mélange de polyéthylène-téréphtalate et/ou polybutylène-téréphtalate et/ou d'autres polyesters et/ou d'autres polymères thermoplastiques.

8. Procédé selon une ou plusieurs des revendications 1 à 7, caractérisé en ce que l'accélérateur de cristallisation utilisé dans la deuxième étape du procédé est pris dans le groupe comportant des
a) esters organiques selon la revendication 1 (a) dans lesquels R' dans l'alcool de formule $(HOCH_2)_x R'$ représente un radical hydrocarboné comportant de 2 à 12 atomes de carbone ou dans l'alcool de formule $HO(R''O)_y R'''$ y vaut un nombre entier compris entre 2 et 8, R'' représente un radical hydrocarboné comportant de 2 à 8 atomes de carbone et R''' un atome d'hydrogène ou un radical hydrocarboné comportant de 2 à 12 atomes de carbone,
b) esters organiques selon la revendication 1 (b) dans lesquels R' dans l'alcool de formule $(HOCH_2)_x R'$ représente un radical hydrocarboné comportant de 2 à 12 atomes de carbone ou dans l'alcool de formule $HO(R''O)_y R'''$ dans laquelle y vaut un nombre entier compris entre 1 e 8 et R'' un radical hydrocarboné comportant de 2 à 8 atomes de carbone,
c) cétones organiques selon la revendication 1 (c) où dans la formule $(R'-CO)_x R$ R et R' chaque fois représentent un radical hydrocarboné comportant de 2 à 16 atomes de carbone et les radicaux R' pouvant être identiques,
h) acétals organiques ou éther-acétals selon la revendication 1 (h) de formule $(R'O_x)_y R''$, où R'' représente un radical hydrocarboné comportant 1 à 6 atomes de carbone et R' représente un radical hydrocarboné comportant de 2 à 12 atomes de carbone,

9. Procédé selon une ou plusieurs des revendications 1 à 8, caractérisé en ce que l'accélérateur de cristallisation contient au moins un noyau aromatique.

10. Procédé selon une ou plusieurs des revendications 1 à 9, caractérisé en ce qu'on ajoute par mélange des renforçants ou autres adjuvants supplémentaires en quantités allant jusqu'à 300 parties pour 100 parties de polyester.

11. Procédé selon une ou plusieurs des revendications 1 à 10, caractérisé en ce qu'on utilise en tant que métal alcalin du sodium, et en tant que composé de métal alcalin du carbonate de sodium, bicarbonate de sodium, hydroxyde de sodium, sels de sodium d'acides mono- ou polycarboxyliques ou alcoolates de sodium.

12. Masse de moulage à base de polyester ayant une viscosité spécifique réduite (mesurée à l'aide d'une solution à 1 % dans l'acide dichloroacétique, à 25 °C) d'au moins 0,3 dl/g dont les groupes carboxyle terminaux transformés sont au moins partiellement en groupes terminaux carboxylate de métal alcalin, caractérisée par une teneur

a) en un accélérateur de cristallisation selon la revendication 1 (a) à 1 (h) en une quantité suffisante pour réduire la température de post-cristallisation, par rapport à celle du polyester sans accélérateur de cristallisation, d'au moins de 4 °C, et
b) en un composé de métal alcalin.